# EUROPÄISCHE PATENTSCHRIFT

(11) **EP 1 582 797 B1**
(45) Veröffentlichungstag und Bekanntmachung des Hinweises auf die Patenterteilung: **11.02.2009**
(21) Anmeldenummer: 04027670.1
(22) Anmeldetag: 22.11.2004
(51) Int. Cl.: F16L 11/08, B32B 27/02, B32B 21/08, B32B 25/10

(54) **Mehrschichtiger Elastomerschlauch mit Verstärkungsschicht aus schwefelhaltigem, polymeren Material**
Multilayer elastomeric hose with reinforcement layer made from sulfur-containing polymeric material
Tuyau multicouche en élastomère avec couche de renforcement en matière polymère contenant du soufre

(30) Priorität: 26.03.2004 DE 102004014997
(43) Veröffentlichungstag der Anmeldung: 05.10.2005
(73) Patentinhaber: VERITAS AG, 63571 Gelnhausen (DE); Ticona GmbH, 65451 Kelsterbach (DE)
(72) Erfinder: Kahn, Peter, 63526 Erlensee (DE); Brück, Martin, 61276 Weilrod (DE)
(74) Vertreter: Grünecker, Kinkeldey, Stockmair & Schwanhäusser Anwaltssozietät

(56) Entgegenhaltungen:
- EP-A- 0 818 477
- US-A1- 2001 018 933

## Beschreibung

Die Erfindung betrifft einen mehrschichtigen Elastomerschlauch nach dem Oberbegriff des 1. Anspruchs.

Ein derartiger Elastomerschlauch für den Transport von Flüssigkeiten ist beispielsweise aus der EP 0 818 477 A1 bekannt.

Derartige Elastomerschläuche werden vorzugsweise im Automobilbereich für den Transport von Flüssigkeiten wie zum Beispiel Kraftstoffen oder hydraulischen Fluiden eingesetzt und sind dabei unter anderem hohen klimatischen und thermischen Belastungen ausgesetzt. Um den verschiedenen mechanischen Beanspruchungen, wie zum Beispiel dem Innendruck, Zug, Biegung, Abknickverhalten und Torsion stand zu halten, sowie um ein gutes Crashverhalten sicherzustellen, verfügen die Elastomerschläuche über verschiedene Arten der Verstärkung. So werden zur Verstärkung derartiger Elastomerschläuche Stahldrähte für Hoch- und Höchstdruckbeanspruchungen oder Garnmaterialien eingesetzt. Bekannt sind hier unter anderem Baumwolle, Modalzwirn, Reyon, Polyester, m-Aramid und p-Aramid. Die eingesetzten Garnmaterialien können sich dabei hinsichtlich ihrer mechanischen, thermischen und chemischen Eigenschaften unterscheiden und die Qualität des damit verstärkten Elastomerschlauchs entscheidend beeinflussen.

Die US 2001/018933 A1 zeigt einen Schlauch mit einer fluorkohlenstoffhaltigen Innenschicht, einer bevorzugt aus verstrickten Glasfasern gefertigten Verstärkungsschicht und optional einer ein metallisches Material aufweisenden Außenschicht.

Der Erfinder hat sich die Aufgabe gestellt, die Belastbarkeit herkömmlicher Elastomerschläuche unter Beibehaltung der typischen, flexiblen Struktur weiter zu erhöhten.

Diese Aufgabe wird gelöst durch einen mehrschichtigen Elastomerschlauch nach Anspruch 1.

Erfindungsgemäß wird ein Polyarylensulfid als polymeres Material in die Verstärkungsschicht eingelagert. Polyarylensulfide im weitesten Sinne sind lineare, verzweigte oder vernetzte Polymere, die Arylensulfideinheiten enthalten. Polyarylensulfide und deren Herstellung sind beispielsweise in "Ullmann's Encyclopedia of Industrial Chemistry", Volume A21, B. Elvers, S. Hawkins und G. Schulz (Eds.), VCH, Weinheim-New York 1992, S. 463-472 beschrieben, worauf Bezug genommen wird. Bevorzugte Polyarylensulfide sind Polyarylenthioether mit wiederkehrenden Einheiten der Formel:

-[(Ar¹)ₙ-X]ₘ-[(Ar²)ᵢ-Y]ⱼ-[(Ar³)ₖ-Z]ₗ-[(Ar⁴)ₒ-W]ₚ- (1)

worin Ar¹, Ar², Ar³, Ar⁴ bzw. W, X, Y und Z unabhängig voneinander gleich oder verschieden sind, die Indizes n, m, i, j, k, l, o und p unabhängig voneinander Null oder ganze Zahlen 1, 2, 3 oder 4 sind, wobei ihre Summe mindestens 2 ist, Ar¹, Ar², Ar³ und Ar⁴ Aryleneinheiten mit 6 bis 18 C-Atomen sind und W, X, Y und Z zweiwertige Verknüpfungsgruppen darstellen, ausgewählt aus -SO₂-, -S-, -SO-, -CO, -O-, -COO- oder Alkylen- oder Alkylidengruppen mit 1 bis 6 C-Atomen, und mindestens eine der Verknüpfungsgruppen W, X, Y oder Z aus -S- besteht. Die Aryleneinheiten Ar¹, Ar², Ar³ und Ar⁴ können wahlweise substituiert oder unsubstituiert sein.

Bevorzugte Arylensysteme sind Phenylen, Biphenylen, Naphthylen, Anthracen und Phenanthren. Vorteilhaft enthält das Polyarylensulfid mindestens 30 mol-%, bevorzugt mindestens 50 mol-% und insbesondere mindestens 70 mol-% Arylensulfideinheiten. Bevorzugtes Polyarylensulfid ist Polyphenylensulfid (PPS). Dieses enthält im allgemeinen mindestens 50 mol-% und insbesondere mindestens 70 mol% Phenylensulfideinheiten und ist beispielsweise unter den Namen Fortron® und Ryton® bekannt.

PPS zeichnet sich durch seine hohe thermische Beständigkeit mit Gebrauchstemperaturen bis 240 °C und seine sehr gute Chemikalienbeständigkeit aus. Insbesondere ist dieses Material überaus dehnbar. So weist der erfindungsgemäße Elastomerschlauch bei Erhöhung des Umgebungsdrucks eine nahezu lineare Volumenzunahme auf. So können Impulse, die durch Druckanstieg eines geförderten Mediums in den erfindungsgemäßen Schlauch eingeleitet werden, besser absorbiert werden als bei den mit gängigen Materialien verstärkten, herkömmlichen Elastomerschläuchen. Durch die Volumenzunahme des erfindungsgemäßen Schlauchs werden die Impulse abgebaut und die nachgeschalteten Aggregate geringer belastet.

In einer besonders vorteilhaften Ausführung weist die Verstärkungsschicht zumindest eine Verstärkungsfaser bzw. zumindest einen Verstärkungsgarn mit PPS auf. Verstärkungsfasern/-garne sind leicht herstellbar, gut zu verarbeiten und weisen in Faserrichtung hervorragende Dehneigenschaften auf. Durch entsprechende Auswahl der weiteren Faserkomponenten sowie der Faserstärke kann die Verstärkungsschicht der individuellen Anforderung des jeweiligen Elastomerschlauchs angepasst und die Flexibilität des Elastomerschlauchs erhöht werden.

Überdies erweist es sich als günstig, wenn Verstärkungsfasern bzw. Verstärkungsgarne zumindest teilweise miteinander verstrickt sind. So lässt sich ein flexibles Geflecht in die Verstärkungsschicht einarbeiten. Derartige verstrickte Faserkonstruktionen sind stark genug um den am häufigsten auftretenden Belastungen stand zu halten. Zudem lässt sich eine Verstrickung der Verstärkungsfasern bzw. der Verstärkungsgarne schnell und kosteneffizient herbeiführen. Die verstrickten Verstärkungsfaserstrukturen sind überaus dehnbar und können allen erforderlichen Formen anpasst werden. Überdies ergibt sich durch die Wahl des Verstrickungsmusters ein noch größeres Anwendungsspektrum, da die Eigenschaften der Faserverstärkung dadurch individuell auf die Anforderungen des fertigzustellenden, mehrschichtigen Elastomerschlauchs angepasst werden können. Zu den bedeutenden Einflussparametern zählen dabei die Dichte der Maschen sowie die Faserstärke.

In einer weiteren vorteilhaften Ausführungsform ist die Innenschicht des mehrschichtigen Elastomerschlauchs zumindest abschnittsweise spiralförmig von der Verstärkungsfaser bzw. dem Verstärkungsgarn umgeben. Durch eine leichte Verdrehung der Verstärkungsfaser bzw. des Verstärkungsgarns beim Umspinnen des Innenrohrs erhöhen sich die Dehneigenschaften der Verstärkungsfaser bzw. des Verstärkungsgarns.

Als besonders günstig erweist sich zudem, das Innenrohr mehrschichtig, spiralförmig zu umspinnen. Eine spiralförmige Umspinnung der Innenschicht eignet sich besonders für die Anwendung von Elastomerschläuchen mit hoher Formbeständigkeit und großen Biegeradien.

Es erweist sich als günstig, wenn der Durchmesser der Verstärkungsfaser bzw. des Verstärkungsgarns vorzugsweise weniger als 30 µm, bevorzugt 12 bis 15 µm beträgt. Durch die Verwendung vieler verhältnismäßig dünner Verstärkungsfasern bzw. -garne verbessern sich die Dehneigenschaften im Vergleich zur Verwendung einer geringeren Anzahl dickerer Verstärkungsfasern bzw. -garne (bei in etwa gleichbleibendem Gesamtquerschnitt aller Verstärkungsfasern bzw. -garne).

Der Aufbau eines erfindungsgemäßen, mehrschichtigen Elastomerschlauchs mit einer Verstärkungsschicht, die ein PPS aufweist, wird nachstehend mit Bezug auf die angehängten Zeichnungen beschrieben.

Kurze Beschreibungen der Zeichnungen:
- Fig. 1: zeigt eine Gesamtansicht des erfindungsgemäßen, mehrschichtigen Elastomerschlauchs mit Innenschicht, Außenschicht und dazwischen liegender Verstärkungsschicht mit einer PPS-Verstärkungsfaser.
- Fig. 2: zeigt eine weitere Gesamtansicht des erfindungsgemäßen, mehrschichtigen Elastomerschlauchs mit Innenschicht, Außenschicht und dazwischen liegender Verstärkungsschicht, die ein verstricktes Netz von Verstärkungsfasern enthält.
- Fig. 3: zeigt die Volumenzunahme eines erfindungsgemäßen, mehrschichtigen Elastomerschlauchs mit einem PPS-Garn als Verstärkungsfaser bei einem Druckanstieg des Innendrucks gegenüber dem Außendruck in einem Druckbereich von 0 bis 20 bar.
- Fig. 4: zeigt die Volumenzunahme eines herkömmlichen Elastomerschlauchs mit einem Aramidgarn als Verstärkungsfaser bei einem Druckanstieg des Innendrucks gegenüber dem Außendruck in einem Druckbereich von 0 bis 20 bar.

### Ausführliche Beschreibung des Ausführungsbeispieles.

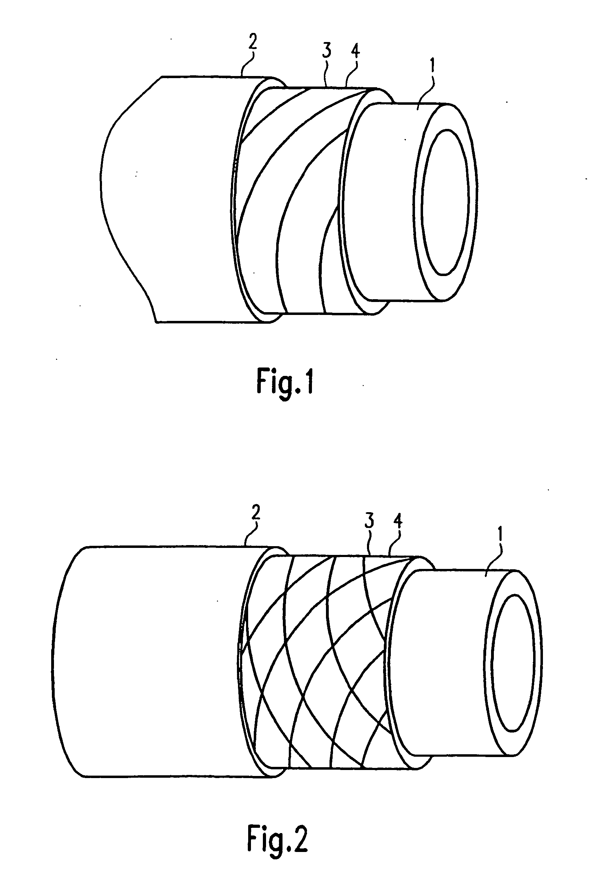

Fig. 1 zeigt eine freigeschnittene Ansicht eines erfindungsgemäßen, mehrschichtigen Elastomerschlauchs, bestehend aus einer Innenschicht 1, einer Außenschicht 2 und einer dazwischen liegenden Verstärkungsschicht 3, die ein PPS 4 aufweist. Die Innenschicht 1 und die Außenschicht 2 bestehen aus beliebigen, elastomerhaltigen Materialien, die geeignet sind, um das jeweilige zu transportierende Medium bestmöglich zu fördern. Die Verstärkungsschicht 3 mit dem PPS-polymeren Material 4 enthält weitere Bestandteile, unter anderem Bindematerialien, um die Innenschicht 1 und die Außenschicht 2 miteinander zu verbinden, und um das verstärkende Material zu fixieren. An dieser Stelle wird nicht näher auf die bevorzugten Werkstoffe der Innen- und Außenschicht 1, 2 sowie die weiteren Komponenten der Verstärkungsschicht 3 eingegangen, da der geschulte Fachmann keine Mühe hat, eine Vielzahl geeigneter Materialien zu bestimmen und diese in entsprechender Weise zusammenzuführen.

Für den Einsatz in der Verstärkungsschicht kommen die Polyarylensulfide in Frage . Wie oben erwähnt sind die Polyarylensulfide im weitesten Sinne lineare, verzweigte oder vernetzte Polymere, die zu mindestens 30 mol-Prozent Arylensulfideinheiten enthalten. Bevorzugte Arylensysteme sind Phenylen, Biphenylen, Naphthylen, Anthracen und Phenanthren. Das bevorzugte Polyarylensulfid ist Polyphenylensulfid (PPS), das im Allgemeinen wenigstens 50 mol-Prozent und insbesondere mindestens 70 mol-Prozent Phenylensulfideinheiten enthält.

Im dargestellten Ausführungsbeispiel in Fig. 1 ist ein PPS-Garn als Verstärkungsfaser in die Verstärkungsschicht 3 eingearbeitet und umgibt die Innenschicht 1 spiralförmig bzw. schraubenförmig. PPS wird gewöhnlich als Pulver und als Granulat geliefert. Das unverstärkte Granulat eignet sich für die Filament- bzw. Faserherstellung und im speziellen für die Extrusions- und Spritzgießverarbeitung. Durch den Zusatz von Glasfasern und Glasfaser-Mineral-Mischungen kann die Steifigkeit sowie die Wärmeformbeständigkeit des unverstärkten Materials deutlich angehoben werden. Ein Fasermaterial kann bis zu ca. 40 Gewichtsprozent Verstärkungsstoffe und eine Dichte von ca. 1,3 bis ca. 2,2 g/cm³ aufweisen. Bei einer Temperatur von 23 °C und einer relativen Luftfeuchtigkeit von 50 % beträgt die Zugfestigkeit eines verstärkten Granulats ca. 150 bis 200 MPa, die Bruchdehnung ca. 100 bis 200 % und das Zug-E-Modul ca. 10 * 10³ MPa bis 20 * 10³ MPa (Prüfmethode: ISO 527 Teil 1 und 2), wobei der Messung der Zugfestigkeit und der Bruchdehnung eine Prüfgeschwindigkeit von 5 mm/min zugrunde liegt. Die maximale Wärmeformbeständigkeitstemperatur (HDT/A) bei 1,8 MPa erreicht ca. +270 °C und (HDT/C) bei 8,0 MPa ca. +220 °C (ISO 75 Teil 1 und 2). Der Längenausdehnungskoeffizient (längs und quer) beträgt im Temperaturbereich von -50 °C bis +90 °C ca. 20 bis 30 * 10⁻⁶ °C⁻¹, und im Temperaturbereich zwischen +90 °C und +250 °C ca. 35 bis 50 * 10⁻⁶ °C⁻¹ (Prüfmethode: ISO 11359-2).

Die Stärke der Verstärkungsfaser 4 kann theoretisch nach Belieben gewählt werden, um dem Mehrschichtschlauch spezifische Eigenschaften zu verleihen. Der Durchmesser der Verstärkungsfasern beträgt vorzugsweise weniger als 30 µm, bevorzugt 12 bis 15 µm. Ebenso ist die Spiralsteigung der Verstärkungsfaser frei wählbar. Die Verstärkungsfaser 4 kann so dicht um die Innenschicht 1 des Mehrschichtsschlauchs gewickelt werden, dass die einzelnen Wicklungen der Verstärkungsfaser 4 aneinander angrenzen und sich gegenseitig berühren. Dabei kann die Verstärkungsfaser 4 auch in mehreren, übereinanderliegenden Schichten gewickelt werden. Zum Zweck der besseren Darstellung des Erfindungsgedankens ist in Fig. 1 eine übertrieben große Verstärkungsfaser 4 mit übertriebener Spiralsteigung und mit übertrieben großem Abstand gezeigt.

Fig. 2 zeigt ein zweites Ausführungsbeispiel des erfindungsgemäßen, mehrschichtigen Elastomerschlauchs mit einer Innenschicht 1, einer Außenschicht 2 und einer dazwischen liegenden Verstärkungsschicht 3 mit Verstärkungsfasern 4. Die Größenverhältnisse sind dabei zum Zweck der besseren Darstellung ebenso übertrieben dargestellt. Die Verstärkungsfaser ist ebenso wie im ersten Ausführungsbeispiel ein Polyphenylensulfid(PPS)-Garn. Zwei verschiedene Verstärkungsgarne umgeben die Innenschicht 1 spiralförmig mit gegenläufiger Steigung. Dies kann die verstärkenden Eigenschaften der Verstärkungsschicht 3 weiter verbessern.

In einem besonders bevorzugten Ausführungsbeispiel sind die Verstärkungsfasern 4 miteinander verstrickt und bilden sozusagen einen "verstrickten Schlauch" innerhalb der Verstärkungsschicht 3, die die Innenschicht 1 umgibt. Durch die Auswahl bestimmter Verstrickungsmuster können gewünschte Festigkeitsflexibilitätseigenschaften erreicht, und gezielt auf die Bedürfnisse des jeweiligen mehrschichtigen Elastomerschlauchs eingestellt werden.

Der geschulte Fachmann ist jederzeit und ohne weitere Instruktionen in der Lage, eine bzw. mehrere Verstärkungsfaser(n) zu fertigen und in einem mehrschichtigen Elastomerschlauch - einzeln oder als verstricktes Geflecht - im Sinne der Erfindung zu verarbeiten. Auf spezielle Fertigungs- und Verarbeitungsmethoden wird daher an dieser Stelle nicht weiter eingegangen.

Die Anwendung eines derartigen erfindungsgemäßen mehrschichtigen Elastomerschlauchs und die sich daraus ergebenden Vorteile werden nachstehend anhand der Zeichnungen 3 und 4 beschrieben.

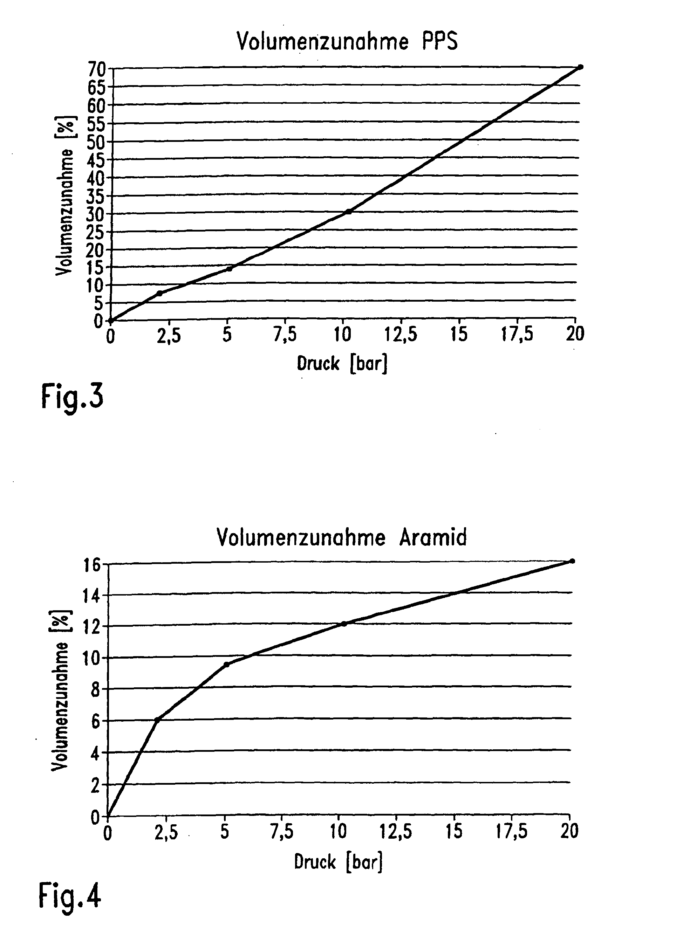

Fig. 3 zeigt die Volumenzunahme eines Elastomerschlauchs verstärkt mit einem PPS-Garn als Verstärkungsfaser in einer Einbausituation bei einem Druckanstieg des Innendrucks gegenüber dem Außendruck (nachstehend Innenüberdruck genannt) in einem Druckbereich von 0 bis 20 bar. Wie sich experimentell bestimmen lässt, nimmt das Volumen des Elastomerschlauchs mit einem PPS-Garn als Verstärkungsfaser bei einem Anstieg des Innendrucks im Bereich von 0 bis 20 bar nahezu linear zu. Bei einem Innenüberdruck von 14 bar ist das Volumen eines erfindungsgemäßen, mehrschichtigen Elastomerschlauchs mit einem PPS-Garn als Verstärkungsfaser um ca. 30 bis 35 % größer als im Vergleichszustand bei gleichem Innen- wie Außendruck. Bei einem Innenüberdruck von 20 bar weist derselbe Schlauch ein um 70 % größeres Volumen auf als im oben genannten Vergleichszustand.

Fig. 4 zeigt die Volumenzunahme eines herkömmlichen, mehrschichtigen Elastomerschlauchs verstärkt mit einem Aramid-Garn als Verstärkungsfaser in einer Einbausituation bei einem Druckanstieg des Innendrucks gegenüber dem Außendruck in einen Druckbereich von 0 bis 20 bar. Im herkömmlichen Elastomerschlauch nimmt das Volumen bei einem Innenüberdruck von bis zu 2 bar in ähnlichem Maße zu wie beim erfindungsgemäßen Elastomerschlauch. Nach einer weiteren Erhöhung des Innenüberdrucks nimmt das Volumen des herkömmlichen, aramidverstärkten Elastomerschlauchs nur noch geringfügig zu. Bei einem Innenüberdruck von 10 bar, ist das Volumen des herkömmlichen Elastomerschlauchs um 12 % größer als im Vergleichszustand bei Druckgleichheit innen und außen. Bei einem Innenüberdruck von 20 bar hat das Volumen des herkömmlichen Elastomerschlauchs gegenüber dem Vergleichszustand um 16 % zugenommen.

Aufgrund dieses Unterschieds der Volumenzunahme gegen Druckerhöhung bei der Gegenüberstellung eines erfindungsgemäßen und eines herkömmlichen mehrschichtigen Elastomerschlauchs ergibt sich der erfindungsgemäße Vorteil, dass die Impulse im erfindungsgemäßen Schlauch bei Druckanstieg im Schlauch durch eine Volumenvergrößerung abgebaut, und die nachfolgenden Aggregate nicht belastet werden. Dies betrifft z. B. auch Lärmbelastungen. Ein herkömmlicher, aramidverstärkter Elastomerschlauch weist nicht diese lineare Kennlinie auf und kann sich bei einem Anstieg des Innendrucks nicht mehr ausdehnen, der Impuls durch Druckanstieg wird also an die nachgeschalteten Aggregate weitergeleitet.

## Patentansprüche

1. Mehrschichtiger Elastomerschlauch mit jeweils zumindest einer Innenschicht (1), einer Außenschicht (2) und einer Verstärkungsschicht (3), **dadurch gekennzeichnet, dass** die Verstärkungsschicht (3) Polyarylensulfid enthält, wobei der Elastomerschlauch bei einem Anstieg des Innendrucks gegenüber dem Außendruck in einem Bereich von 0 bis 20 bar eine im Wesentlichen lineare Volumenzunahme aufweist.

2. Mehrschichtiger Elastomerschlauch nach Anspruch 1, **dadurch gekennzeichnet, dass das** Polyarylensulfid vorzugsweise mehr als 50 mol-Prozent, bevorzugt mehr als 70 mol-Prozent Arylensulfideinheiten enthält.

3. Mehrschichtiger Elastomerschlauch nach Anspruch 1 und/oder 2, **dadurch gekennzeichnet, dass** die Aryleneinheiten des Polyarylensulfids ausgewählt werden aus einer oder mehrerer der folgenden Gruppen: Phenylen, Biphenylen, Naphthylen, Anthracen oder Phenanthren.

4. Mehrschichtiger Elastomerschlauch nach zumindest einem der voranstehenden Ansprüche, **dadurch gekennzeichnet, dass** die Verstärkungsschicht (3) Polyphenylensulfid enthält.

5. Mehrschichtiger Elastomerschlauch nach zumindest einem der voranstehenden Ansprüche, **dadurch gekennzeichnet, dass** die Verstärkungsschicht (3) zumindest eine Verstärkungsfaser bzw. zumindest einen Verstärkungsgam (4) mit Polyarylensulfid enthält.

6. Mehrschichtiger Elastomerschlauch nach zumindest einem der voranstehenden Ansprüche, **dadurch gekennzeichnet, dass** die Verstärkungsschicht (3) zumindest eine Verstärkungsfaser bzw. zumindest einen Verstärkungsgam (4) aus Polyarylensulfid enthält.

7. Mehrschichtiger Elastomerschlauch nach zumindest einem der voranstehenden Ansprüche, **dadurch gekennzeichnet, dass** die Verstärkungsfaser bzw. Verstärkungsgarne (4) zumindest teilweise miteinander verstrickt sind.

8. Mehrschichtiger Elastomerschlauch nach zumindest einem der voranstehenden Ansprüche, **dadurch gekennzeichnet, dass** die Verstärkungsschicht (3) zumindest abschnittsweise zwischen der Innenschicht (1) und der Außenschicht (2) liegt.

9. Mehrschichtiger Elastomerschlauch nach zumindest einem der voranstehenden Ansprüche, **dadurch gekennzeichnet, dass** die Verstärkungsfaser bzw. der Verstärkungsgarn (4) die Innenschicht (1) zumindest abschnittsweise spiralförmig umgibt.

## Claims

1. A multilayered elastomer hose comprising at least an inner layer (1), an outer layer (2) and a reinforcement layer (3), **characterized in that** the reinforcement layer (3) contains polyarylene sulfide, the elastomer hose showing a substantially linear volume increase upon rise of the internal pressure over the external pressure in a range of 0 to 20 bar.

2. The multilayered elastomer hose according to claim 1, **characterized In that** the polyarylene sulfide preferably contains more than 50 mol percent, preferably more than 70 mol percent, arylene sulfide units.

3. The multilayered elastomer hose according to claim 1 and/or 2, **characterized in that** the arylene units of the polyarylene sulfide are selected from one or more of the following groups: phenylene, biphenylene, naphthylene, anthracene or phenanthrene.

4. The multilayered elastomer hose according to at least one of the preceding claims, **characterized in that** the reinforcement layer (3) contains polyphenylene sulfide.

5. The multilayered elastomer hose according to at least one of the preceding claims, **characterized In that** the reinforcement layer (3) contains at least a reinforcement fiber or at least a reinforcement yam (4) with polyarylene sulfide.

6. The multilayered elastomer hose according to at least one of the preceding claims, **characterized In that** the reinforcement layer (3) contains at least a reinforcement fiber or at least a reinforcement yam (4) of polyarylene sulfide.

7. The multilayered elastomer hose according to at least one of the preceding claims, **characterized In that** the reinforcement fiber or reinforcement yarns (4) are entwined with one another at least in part.

8. The multilayered elastomer hose according to at least one of the preceding claims, **characterized in that** the reinforcement layer (3) is positioned at least in sections between the inner layer (1) and the outer layer (2).

9. The multilayered elastomer hose according to at least one of the preceding claims, **characterized in that** the reinforcement fiber or the reinforcement yam (4) spirally surrounds the inner layer (1) at least in sections.

## Revendications

1. Tuyau multicouche en élastomère avec au moins une couche intérieure (1), une couche extérieure (2) et une couche de renforcement (3), **caractérisé en ce que** la couche de renforcement (3) contient un poly(sulfure d'arylène), étant précisé que le tuyau en élastomère, lors d'une augmentation de la pression interne par rapport à la pression externe de l'ordre de 0 à 20 bar, présente une augmentation de volume globalement linéaire.

2. Tuyau multicouche en élastomère selon la revendication 1, **caractérisé en ce que** le poly(sulfure d'arylène) contient de préférence plus de 50 % en moles, de préférence plus de 70 % en moles d'unités de sulfure d'arylène.

3. Tuyau multicouche en élastomère selon la revendication 1 et/ou 2, **caractérisé en ce que** les unités d'arylène du poly(sulfure d'arylène) sont choisies parmi un ou plusieurs des groupes suivants : phénylène, biphénylène, naphtylène, anthracène ou phénanthrène.

4. Tuyau multicouche en élastomère selon l'une au moins des revendications précédentes, **caractérisé en ce que** la couche de renforcement (3) contient un poly(sulfure de phénylène).

5. Tuyau multicouche en élastomère selon l'une au moins des revendications précédentes, **caractérisé en ce que** la couche de renforcement (3) contient au moins une fibre de renforcement ou au moins un fil de renforcement (4) avec un poly(sulfure d'arylène).

6. Tuyau multicouche en élastomère selon l'une au moins des revendications précédentes, **caractérisé en ce que** la couche de renforcement (3) contient au moins une fibre de renforcement ou au moins un fil de renforcement (4) composé d'un poly(sulfure d'arylène).

7. Tuyau multicouche en élastomère selon l'une au moins des revendications précédentes, **caractérisé en ce que** la fibre de renforcement ou les fils de renforcement (4) sont au moins partiellement assemblés.

8. Tuyau multicouche en élastomère selon l'une au moins des revendications précédentes, **caractérisé en ce que** la couche de renforcement (3) se trouve au moins par endroits entre la couche intérieure (1) et la couche extérieure (2).

9. Tuyau multicouche en élastomère selon l'une au moins des revendications précédentes, **caractérisé en ce que** la fibre de renforcement ou le fil de renforcement (4) entoure la couche intérieure (1) au moins par endroits en spirale.
